# EUROPEAN PATENT SPECIFICATION

(11) **EP 4 052 048 B1**
(45) Date of publication and mention of the grant of the patent: **27.05.2026**
(21) Application number: 20797133.4
(22) Date of filing: 30.10.2020
(51) Int. Cl.: G01N 35/10, G01N 35/00

(54) **FLUID ANALYSIS ARRANGEMENT AND METHOD**
ANORDNUNG UND VERFAHREN ZUR FLÜSSIGKEITSANALYSE
AGENCEMENT ET PROCÉDÉ D'ANALYSE DE FLUIDES

(30) Priority: 31.10.2019 EP 19206388
(43) Date of publication of application: 07.09.2022
(73) Proprietor: F. Hoffmann-La Roche AG, 4070 Basel (CH)
(72) Inventor: NIESS, Alexander Fidelis, 4070 Basel (CH); LEBOUC-HAEFLIGER, Vanessa, 4070 Basel (CH); LEMA MARTINEZ, Carmen, 4070 Basel (CH); LUEMKEMANN, Joerg, 4070 Basel (CH); AMRHEIN, Sven, 4070 Basel (CH); JOHN, Jasmin, 4070 Basel (CH); ZUMSTEIN, Thomas, 4070 Basel (CH); BURRI, Sven, 4070 Basel (CH); STEINER, Roger, 4070 Basel (CH); WERK, Tobias, 4070 Basel (CH)
(74) Representative: Latscha Schöllhorn Partner AG
(86) International application number: PCT/EP2020/080583
(87) International publication number: WO 2021/084102

(56) References cited:
- EP-A1- 3 076 157
- DE-A1- 3 614 960
- US-A- 5 536 471
- US-A1- 2005 074 363
- US-A1- 2010 037 919
- COULTER BECKMAN: "HIAC 9703+ Liquid Particle Counter - DOC026.98.80097", 1 October 2013 (2013-10-01), pages 1 - 94, XP093145816, Retrieved from the Internet <URL:https://www.keison.co.uk/products/metone/HIAC9703+Manual.pdf> [retrieved on 20240326]

## Description

### Technical Field

The present invention relates to a fluid analysis arrangement and a method of analysing a fluid. Such arrangements and methods can be used for analysing fluids, particularly for controlling quality of the fluids as to the presence of visible and sub-visible particles.

### Background Art

In the context of quality control of fluids often verification as to the presence of particles is involved. For example, in development or production of pharmaceutical fluids such as liquid parenteral drugs, it is typically required to ensure that the drugs do not comprise any particles which may cause undesired side effects or lowering efficacy when being administered.

Thereby, often specific devices are used for identifying particles in the liquid. Such devices involve various techniques for identifying particles in the desired range including sub-visible particles. For example, some devices apply optical methods based on either light scattering, light obscuration, or direct imaging. Thereby, typically the devices comprise a sensor equipped with a high intensity light source such as a laser source or a halogen light. The light source is used to provide a light beam to the liquid passing a detection chamber in order to illuminate potentially present particles. If light scattering is used, then the redirected light is detected by a photo detector. If light blocking or light obscuration is used, the loss of light is detected. The amplitude of the light scattered or light blocked is measured and the particle is counted and tabulated into standardized counting bins.

For allowing convenient access of the liquid inside a container the sensors of such devices often are provided with a cuvette or a needle. By means of such cuvettes or needles, the liquid or a sufficient amount thereof can be withdrawn from the container and forwarded to an appropriate location accessible by the sensor.

Devices of the kind described above allow for accurately identifying particles in liquids such that they are commonly used for quality control in pharmaceutical and other industry. Also, such devices are accepted in standard procedures required to be applied in order to comply with conditions defined by official authorities. E.g., document EP 3 076 157 A1 a describes a blood measuring device for automatically measuring blood samples.

However, even though known devices used for particle identification are accurate and widely accepted, they typically are operated in a comparably inefficient fashion particularly when a comparably large number of samples has to be analyzed. Moreover, when processing plural samples a considerable risk of cross-contamination exists since the cuvette is positioned in one sample liquid after the other. More specifically, the known devices usually are operated by placing a container such as a vial containing a fluid to be analyzed on a given platform of the device where it is accessible by the cuvette of the sensor. Then the cuvette is introduced into the liquid inside the vial and the liquid is sensed for particles. Sensor data is transferred to a computing or evaluating unit of the device where it is evaluated. After sensing the liquid, the cuvette is lifted out of the liquid and the vial is removed from the platform. In a subsequent step, a further vial is positioned on the platform and the cuvette is introduced into its liquid.

Considering the above, there is a need for a system allowing to efficiently and accurately analyse plural fluids as to the presence of particles.

### Disclosure of the Invention

According to the invention this need is settled by a fluid analysis arrangement as it is defined by the features of independent claim 1, and by a method of analysing a fluid as it is defined by the features of independent claim 10. Preferred embodiments are subject of the dependent claims.

In one aspect, the invention is a fluid analysis arrangement comprising a particle quantifying device, a holder, a robot, a washing station and a control unit. The particle quantifying device has a sensor unit with a sensing stick to be arranged in a fluid to withdraw the fluid and sense for particles in the fluid, and an evaluation unit. The holder has a plurality of seats each configured to receive a container in which a sample fluid is arranged. Thus, the holder is configured to receive a plurality of sample fluids each being arranged in one of the containers received in one of the seats of the holder. The control unit is connected to the particle quantifying device and to the robot. The sensor unit is mounted to the robot. The control unit is configured to control the robot to arrange the sensing stick in one of the sample fluids of one of the containers received in the seats of the holder after another, to activate the particle quantifying device to sense for particles in the sample fluids, and to control the robot to arrange the sensing stick in the washing station after each sensing for particles in one of the sample fluids and before arranging the sensing stick in a next one of the sample fluids. Particularly, the control unit may be configured to activate the particle quantifying device to sense for particles in the sample fluids by sensing for particles in one of the sample fluids of the containers received in the seats of the holder after another. Thereby, the control unit may be configured to, in between sensing for particles in two different sample fluids, arrange the sensing stick in the washing station.

The term "particle" as used herein relates to any undissolved entity or matter present in the sample fluid. It may particularly relate to particulate and typically solid matter, other than gas bubbles, unintentionally present in the sample fluid.

The particle quantifying device can be a any device suitable for quantifying or identifying particles of a desired size range in a fluid. Thereby, particles can be quantified by directly measuring the concentration of the particles in the fluid or by indirectly determining concentration by measuring the amount of particles in a predefined flow of the fluid. Additionally, the particle quantifying device may also be able to measure further properties of the particles such as size, shape or the like. Specifically, the particle quantifying device can be a liquid particle counter such as the analytical device HIAC 9703+ commercialized by Beckman Coulter, Inc. or a similar device. The particles sensed and evaluated by the particle quantifying device can be or include sub-visible particles. Such particle quantifying device can optically identify particles in the fluid. For example, it can apply light obscuration techniques for identifying particles.

The fluid analysis arrangement can particularly be configured to be used for quality control. For example, it can be adapted for controlling quality of a drug substance in accordance with requirements defined by authorities to be applied in pharmaceutical development and manufacture. For example, the United States Pharmacopeia (USP) defines in its reference standard no. 788 titled "Particulate Matter in Injections" directed to examination of injections and parenteral infusions for sub-visible particles methods and requirements to by applied for ensuring quality of substances to be delivered by injection or infusion. Thus, the fluid analysis arrangement can be used to control quality of fluids in accordance with USP 788.

The container can be any containment suitable for housing the sample fluid to be analyzed. It can particularly be a vial, a test tube, a cartridge or the like. The term "vial" as used herein can relate to a vial in the literal sense, i.e. a comparably small vessel or bottle, often used to store pharmaceutical products or pharmaceuticals or medications in liquid, powdered or capsuled form. The vial can be made of a sterilisable material such as glass or plastic such as, e.g., polypropylene. It typically comprises a cover or cap including a sealing such as a rubber stopper or a septum which for many applications is designed to be pierced.

The sensing stick can be a cuvette or a needle and, more specifically, an injection needle. Known particle quantifying devices use injection needles as sensing sticks which can be beneficial for being introduced into the container also in cases the containers are comparably small or have comparably small openings. The sensing stick can be configured to suck or withdraw the fluid into the sensing unit where it is sensed for particles. More specifically, via the sensing stick the sample fluid or a sufficient amount thereof can be withdrawn from the container and forwarded to an appropriate location of the sensor unit where it can be analyzed for the presence of particles. Also, by withdrawal the sensing stick allows for receiving the liquid in motion inside the sensor unit which can be beneficial in many types of sensor techniques.

The washing station of the arrangement according to the invention makes it possible that the sensor unit is efficiently cleaned in between measuring two subsequent sample fluids. This allows for preventing cross contamination between sample fluids such that an appropriate quality of the single measurements can be ensured and it can be avoided that the sample fluids have to be disposed after sensing for particles. Particularly, when comparably expensive sample fluids such as fluids having biological drugs, e.g. antibodies, are involved it can beneficial when the sample fluids can be further processed.

By having the robot carrying the sensing stick of the sensor unit, it may be achieved that the physical sensing is automatically provided. Like this, efficiency of the analysis can be increased particularly when a comparably large number of sample fluids is involved. Thereby, the holder allows for predefining the exact location and orientation of the containers such that the robot can precisely position the sensing stick in side the sample fluids.

Moreover, by providing the control unit and connecting it to the robot and the particle quantifying device, the complete process can automatically be performed such that efficiency can be essentially increased. The connection between control unit and robot or particle quantifying device can be any suitable data communication connection. For example, the control unit can be connected to the robot and particle quantifying device via cables or wires. Also wireless connections are possible. Furthermore, for communicating with the robot and/or the particle quantifying device one or plural suitable protocols and/or interfaces can be used. For example, particle quantifying devices typically are provided with interfaces for communication and involve predefined protocols for interaction. Such interfaces and protocols can be used in the arrangement according to the invention for establishing the connection between the control unit and the particle quantifying device.

The control unit can be or comprise any suitable computing device such as a conventional computer. Thereby, the term "computer" relates to any eletronic data processing device or apparatus. The term may comprise a single device such as a server computer, a desktop computer, a laptop computer, a tablet, a smartphone, an embedded system, or the like. It may also relate to a combination of such devices such as a distributed system having components at different locations. Typically, computers are composed of plural components such as a central processing unit (CPU), a permanent data storage having a recording medium such as a hard disk, a flash memory or similar, a random access memory (RAM), a read-only memory (ROM), communication adapters such as a universal serial bus (USB), a local area network (LAN) adapter, a wireless LAN (WLAN) adapter, a Bluetooth adapter or similar, user interfaces such as a keyboard, a touchscreen, a mouse, a screen, a microphone, a loudspeaker or similar, and other components. Thereby, computers can be assembled in varying embodiments of the above and/or other components.

Configuring the control unit in accordance with the invention can involve running a dedicated computer program on the computer to perform the respective tasks. Thereby, the computer can be arranged to be physically connected to the robot and the particle quantifying device, to logically perform steps to evaluate and interact with the robot and the particle quantifying device, and to provide instructions to the robot and the particle quantifying device. Providing instructions can comprise transferring data signals to the robot and/or the particle quantifying device. These data signal can represent the instructions which can be understood and effectuated by the robot and/or the particle quantifying device.

As mentioned, by equipping the fluid analysis arrangement with the washing station and by configuring the control unit to cause the robot to position the sensing stick in the washing station after sensing for particles in each sample fluid, it can be ensured that the sensing stick is clean before being transferred to the subsequent sample fluid. Like this, cross contamination between sample fluids can be prevented. For an efficient cleaning of the sensor unit, the washing station can be a multi element assembly. In particular, it can have plural components for providing various tasks involved in cleaning the sensor unit.

Preferably, the washing station comprises a cleaning medium reservoir housing a cleaning medium and a cleaning medium forwarder connected to the cleaning medium reservoir, wherein the control unit is connected to the washing station and configured to activate the cleaning medium forwarder to flush the sensor unit or particularly its sensing stick with the cleaning medium after the particle quantifying device sensing for particles in the sample fluid of one of the containers received in the seats of the holder and before the particle quantifying device sensing for particles in the sample fluid of another one of the containers received in the seats of the holder. The term "flush" as used herein may particularly relate to providing the cleaning medium through the sensing stick. It may also involve provision of the cleaning medium to the outside of any component of the sensor unit but forwarding the cleaning medium through the sensing stick may be specifically beneficial. The cleaning medium forwarder involved herein can be any structure allowing to forward or advance the medium in order to flush the sensor unit. In particular, in one advantageous variant, it can be embodied as or comprise a pump for actively advancing or forwarding the cleaning medium. Or, in another advantageous variant, the cleaning medium forwarder can comprise a valve or a similar structure connected to the reservoir which houses the cleaning medium under pressure. Thus, in this variant the cleaning medium forwarded can be embodied as combination of pressurized reservoir and valve or similar structure. Thereby, activating the valve or similar structure allows for controlling a cleaning medium flow out of the reservoir. Providing the cleaning medium reservoir and the cleaning medium forwarder allows for efficiently cleaning the sensor unit in an automated manner driven by the control unit.

The cleaning medium can be a solution or purified water such as, particularly, ultrapure water or water for injection. Alternatively or additionally, it can be or comprise ethanol or a similar substance or reagent suitable for cleaning. Consequently, the cleaning medium reservoir can be a solution reservoir, a pure water reservoir, an ethanol reservoir or another substance reservoir. Advantageously, the control unit is configured to flush the sensor unit with the cleaning medium after sensing of a sample fluid in one container and before sensing another sample fluid in a subsequent container.

Thereby, the washing station preferably has a washing seat in which the sensing stick is arranged when the sensor unit is flushed with the cleaning medium. During flushing the sensor unit, the cleaning medium can be expelled by the sensing stick into the washing seat. The washing seat can be embodied in a block or body of the washing station. Such washing seat allows for efficiently and precisely positioning the sensing stick in an automated fashion via the robot.

The washing station preferably comprises a cleaning medium cavity arranged to receive the cleaning medium after flushing the sensor unit. The cleaning medium cavity and the washing seat can be the same or different structures embodied in the washing station.

The washing seat and the cleaning medium cavity preferably are in fluid communication such that, after flushing the sensor unit, the cleaning medium is provided into the washing seat and transferred from the washing seat into the cleaning medium cavity. The fluid communication between the washing seat and the cleaning medium cavity can be established by an overflow structure arranged such that the cleaning medium flows to from the washing seat to the cleaning medium cavity after filling the washing seat to a certain extent and before the washing medium exits the washing station.

The control unit preferably is configured to control the robot to arrange the sensing stick in the cleaning medium cavity to sense for particles in the cleaning medium after flushing the sensor unit. Such configuration allows for verifying if the cleaning medium is sufficiently pure in order to conclude that no particles reside in the sensor unit. Like this, it can efficiently be assured that the sensor unit is clean before any further sample fluid is measure. More specifically, such configuration allows for using the particle quantifying device itself for verifying cleanness of the sensor unit and to prevent cross contamination in an efficient automated manner.

Thereby, the control unit preferably is configured to control the robot to arrange the sensing stick in the sample fluid of another one of the containers received in the seats of the holder when the amount of particles sensed in the cleaning medium after flushing the sensor unit is below a predefined threshold. The other one of the containers can particularly be a next one of a sequence of the containers. Predefining a threshold and ensuring it is not exceeded allows for efficiently guaranteeing sufficient cleanness of the senor unit and that no critical amount of residual particles are in the sensor unit.

The control unit further preferably is configured to activate the cleaning medium forwarder to flush the sensor unit with the cleaning medium when the amount of particles sensed in the washing medium after flushing the sensor unit is above the predefined threshold. Here, the sensor unit can be re-washed in order to achieve appropriate cleanness. While being re-washed the sensing stick can be re-arranged in the washing seat.

The washing station preferably comprises a drying coupler and the control unit is configured to control the robot to arrange the sensing stick in the drying coupler before arranging the sensing stick in the sample fluid of another one of the containers received in the seats of the holder. The drying coupler can be any coupling structure allowing for coupling the sensing stick in order to dry the sensor unit. For example, it can be a drying cavity which may be provided with a gasket structure in order to allow tight coupling of the sensing stick. By equipping the washing station with the drying coupler it can be achieved that the sensor unit is dried after being washed. Like this, it can be prevented that cleaning medium contacts the sample fluids which might affect the measurements.

Thereby, the washing station preferably comprises a vacuum creator connected to the control unit, wherein the control unit is configured to activate the vacuum creator to dry the sensor unit when the sensing stick is arranged in the drying coupler. The vacuum creator can be any structure or component allowing to provide an negative pressure to the drying coupler. For example, the vacuum creator can comprise a vacuum pump. Or, it can be equipped with a vacuum vessel coupled to the drying coupler, e.g. via a controllable valve. Such vacuum creator allows for sucking or withdrawing residual cleaning medium out of the sensor unit after being flushed. The vacuum creator allows for an efficient automated drying of the sensor unit after washing and before sensing for particles in a subsequent sample fluid.

Preferably, the fluid analysis arrangement comprises a shaker, wherein the holder is arranged on the shaker to be moved by the shaker. By shaking the holder and, therewith, the containers it can be achieved that the particles in the sample fluids are kept in suspense. In other words, it can be prevented that the particles sediment such that they cannot be sensed by the sensor unit anymore. Keeping the particles in suspension may be a requirement of the reference standards involved such as of USP 788. Particularly, since comparably many sample fluids may be automatically processed by the fluid analysis arrangement without any human interaction in between, which can take considerable time, the shaker may achieve that particles are accurately sensed in the sample fluids of all containers involved.

Thereby, the control unit preferably is connected to the shaker and configured to activate the shaker when the sensing stick is not arranged in the sample fluid of any container received in the seats of the holder. Such configuration allows for precisely sensing the particles in the sample fluid with any impairment induced by movements of shaking the container involved.

Preferably, the robot is a linear robot embodied to move the sensor unit along a horizontal x-axis and a vertical z-axis. Advantageously, the robot is embodied to additionally move the sensor unit along a horizontal y-axis. Such linear robots allow for efficiently and accurately move the sensing stick or the complete sensor unit between the container and the washing station. Moreover, such linear robots typically are comparably robust and cause comparably low maintenance effort.

Preferably, the fluid analysis arrangement comprises a sample loop positioned between the sensor unit of the particle quantifying device and the evaluation unit of the particle quantifying device. The term "sample loop" in this context can relate to any structure allowing for increasing a distance or fluid path between the control unit and the evaluation unit or other components of the particle quantifying device. Like this, it can be assured that the fluid samples do not contact the evaluation unit and/or the other components. The sample loop can be embodied as a tube increasing a flow path after the sensor unit. To achieve a substantial increase without requiring comparably lots of space, the tube of the sample loop can be wound or similarly arranged. In case the particle quantifying device has a pump or a similar element to withdraw the sample fluid into the sensor unit via the sensing stick, the sample loop can essentially decrease the risk that the sample fluid contacts the pump or a similar element and, thereby, that cross-contamination between plural sample fluids occurs.

Preferably, the fluid analysis arrangement comprises a sample fluid drawer in fluid connection with the sensing stick of the sensor unit. Thereby, the fluid drawer can be embodied as a pump. Such pump allows for a controlled draw up of sample fluid into the system and particularly into the sensor unit such that an accurate and safe drawing up is possible. Also, such pump may allow for forwarding the sample fluid into an opposite direction, if required. Alternatively, the sample fluid drawer my be any other pressure adjusting system. For example, the sample fluid drawer is contained by the particle quantifying device. Advantageously, the fluid connection between the fluid drawer and the sensing stick of the sensor unit passes the sample loop. Thus, the sample loop may be arranged in the fluid connection between the sample fluid drawer and the sensing stick of the sensor unit.

Thereby, a fluid connection structure between the sample fluid drawer and the sensing stick of the sensor unit preferably is at least partially filled with a transmission medium. The fluid connection structure may be a tube or a similar conduit allowing for liquid and/or pressure transfer.

In an advantageous embodiment, the transmission medium is a liquid which is comparable little compressible during drawing of the sample fluid. For example, the transmission medium can be purified water. Between the transmission medium and the sample fluid, a gas such as air can be located in order to prevent contact between the sample fluid and the transmission medium. By providing the transmission medium, an increased pressure transmission can be achieved which allows for a more accurate drawing of the sample fluid. For example, effects caused by varying gas volume between the sample fluid drawer and the sensing stick can essentially be reduced. Particularly, when the path between the sample fluid drawer and the sensing stick is comparably large, such as when a sample loop is provided, having the transmission medium can be particularly beneficial.

In another advantageous embodiment, the transmission medium is a low-reactive gas such as an inert gas. For example, the transmission medium may be nitrogen or a similar gas. Such transmission medium allows for ensuring that no residuals are provided in the path between the sample fluid drawer and the sensing stick such as in the sample loop. More specifically, it allows for preventing contamination of the drawn sample fluid.

In another aspect, the invention is a method of analyzing a fluid, comprising the steps of: i) obtaining a plurality of containers each filled with a sample fluid to be analyzed; ii) a robot automatically arranging a sensing stick of a sensor unit of a particle quantifying device in one of the sample fluids of the plurality of containers; iii) the sensor unit of the particle quantifying device automatically sensing for particles in the one of the sample fluids; iv) the robot automatically arranging the sensing stick of the sensor unit of the particle quantifying device in a washing station; v) cleaning the sensing stick of the sensor unit of the particle quantifying device arranged in the washing station; and vi) repeating steps ii) to v) for each of the other ones of the samples of the plurality of containers one after the other.

Even though the steps of the method according to the invention are provided with numbers above, this numbering is not to be understood as limiting the method to a particular sequence. Rather, the steps listed may be performed in another sequence or order.

The method according to the invention and its preferred embodiments described below allow for achieving the effects and benefits of the fluid analysis arrangement and its preferred embodiments described above.

Preferably, step v) comprises a cleaning medium forwarder flushing the sensor unit with a cleaning medium. Thereby, the washing station preferably has a washing seat in which the sensing stick is arranged when the sensor unit is flushed with the cleaning medium.

The cleaning medium preferably is gathered after flushing the sensor unit. Thereby, the sensor unit of the particle quantifying device preferably automatically senses for particles in the gathered cleaning medium. Thereby, step vi) preferably is performed when the amount of particles sensed in the gathered cleaning medium is below a predefined threshold. Step v) preferably is re-performed when the amount of particles sensed in the gathered cleaning medium is above a predefined threshold.

Preferably, step v) comprises drying the sensor unit. Thereby, drying the sensor unit preferably comprises a vacuum creator of the washing station applying a vacuum to the sensor unit.

Preferably, the method comprises shaking the plurality of containers in step iii), in step iv) and in step v). Such shaking advantageously is applied by a shaker which can be operated and controlled automatically.

### Brief Description of the Drawings

The fluid analysis arrangement according to the invention and the method according to the invention are described in more detail herein below by way of an exemplary embodiment and with reference to the attached drawings, in which:
- Fig. 1: shows a block scheme of a top view of an embodiment of the fluid analysis arrangement according to the invention;
- Fig. 2: shows a block scheme of a side view of the fluid analysis arrangement of Fig. 1; and
- Fig. 3: shows flow scheme of operating the fluid analysis arrangement of Fig. 1.

### Description of Embodiments

In the following description certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "above", "upper", "proximal", "distal", and the like, may be used to describe one element's or feature's relationship to another element or feature as illustrated in the figures. These spatially relative terms are intended to encompass different positions and orientations of the devices in use or operation in addition to the position and orientation shown in the figures. For example, if a device in the figures is turned over, elements described as "below" or "beneath" other elements or features would then be "above" or "over" the other elements or features. Thus, the exemplary term "below" can encompass both positions and orientations of above and below. The devices may be otherwise oriented (rotated 90 degrees or at other orientations), and the spatially relative descriptors used herein interpreted accordingly. Likewise, descriptions of movement along and around various axes include various special device positions and orientations.

To avoid repetition in the figures and the descriptions of the various aspects and illustrative embodiments, it should be understood that many features are common to many aspects and embodiments. Omission of an aspect from a description or figure does not imply that the aspect is missing from embodiments that incorporate that aspect. Instead, the aspect may have been omitted for clarity and to avoid prolix description. In this context, the following applies to the rest of this description: If, in order to clarify the drawings, a figure contains reference signs which are not explained in the directly associated part of the description, then it is referred to previous or following description sections. Further, for reason of lucidity, if in a drawing not all features of a part are provided with reference signs it is referred to other drawings showing the same part. Like numbers in two or more figures represent the same or similar elements.

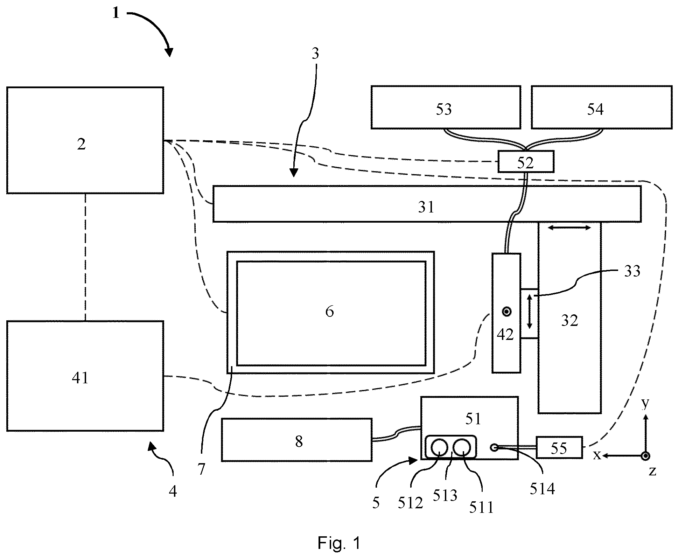

Fig. 1 shows an embodiment of a fluid analysis arrangement 1 according to the invention. The fluid analysis arrangement 1 comprises a liquid particle counter 4 as particle quantifying device, a linear robot 3, a holder 6, a shaker 7, a washing station 5 and a control unit 2.

The control unit 2 is a computer running a dedicated software for configuring the computer to perform various tasks for automatically processing analysis of plural sample fluids.

The liquid particle counter 4 comprises an evaluation station 41 and a sensor unit 42. It is configured to apply light obscuration techniques for identifying particles in fluids. For example, the liquid particle counter can be the analytical device HIAC 9703+ commercialized by Beckman Coulter, Inc.. The evaluation station 41 and the sensor unit 42 are interconnected by a wire such that a sensor signal can be transferred from the sensor unit 42 to the evaluation station 41 where it can be analyzed and further processed. The evaluation station 41 has an interface by which it is connected to the control unit 2 via a data wire. Thereby, the control unit 2 is configured by the dedicated software to communicate with the evaluation station 41 in accordance with a protocol predefined by the liquid particle counter 4 or its manufacturer.

The linear robot 3 has an x-arm 31, a y-arm 32 and a z-arm 33. The y-arm 32 is mounted to the x-arm 31 such that it can be linearly displaced back and forth along a horizontal axis x, i.e. left and right in Fig. 1. Further, the z-arm 33 is mounted to the y-arm 32 such that it can be linearly displaced back and forth along a horizontal axis y, i.e. up and down in Fig. 1. Finally, the sensor unit 42 is mounted to the z-arm 33 such that it can be linearly displaced back and forth along a vertical axis z, i.e. out of the plane shown in Fig. 1. The linear robot 3 has an interface to which it is connected to the control unit 2 via a data wire. Thereby, the control unit 2 is configured by the dedicated software to communicate with the linear robot 3 in accordance with a protocol predefined by the linear robot or a manufacturer thereof. In particular, the control unit 2 is configured to move the sensor unit 42 at any desired position by means of the linear robot 3.

The holder 6 has a plurality of seats each configured to receive a vial as container in which a sample fluid is arranged. The plurality of vials arranged in the seats of the holder contain the different fluid samples to be analysed as to the presence of visible and sub-visible in quality control. The holder 6 is placed on the shaker 7 such that the shaker 7 moves the holder 6 when being activated. Thereby, the vials positioned in the holder 6 are moved or shaken as well such that eventual particles inside the sample fluids are kept in suspension or distributed in the sample fluids. Like this, it can be achieved that the particles can reliably be identified by sensor unit 42. For activating the shaker 7, it is connected to the control unit 2 via a wire. The control unit 2 is configured by the dedicated software to activate and deactivate the shaker 7, when desired.

The washing station 5 has a pure water reservoir 53 as cleaning medium reservoir filled with ultrapure water, a storage and cleaning solution reservoir 54 and a washing pump 52 as cleaning medium forwarder. The washing pump 52 is in fluid communication with the pure water reservoir 53, the storage and cleaning solution reservoir 54, and the sensor unit 42. It is further connected to the control unit 2 via a wire. The control unit 2 is configured by the dedicated software to activate and deactivate the washing pump 52 as desired.

The washing station 5 comprises a washing body 51 and a vacuum pump 55 as vacuum creator. The washing body 51 is equipped with a washing seat 511, a cleaning medium cavity 512 in fluid connection with the washing seat 511 by means of an overflow structure 513, and a drying coupler 514 connected to the vacuum pump 55. The vacuum pump 55 is connected to the control unit 2 via a wire. The control unit 2 is configured by the dedicated software to activate and deactivate the vacuum pump 55 as desired. The cleaning medium cavity 512 is in fluid connection with a waste container 8 of the fluid analysis arrangement 1.

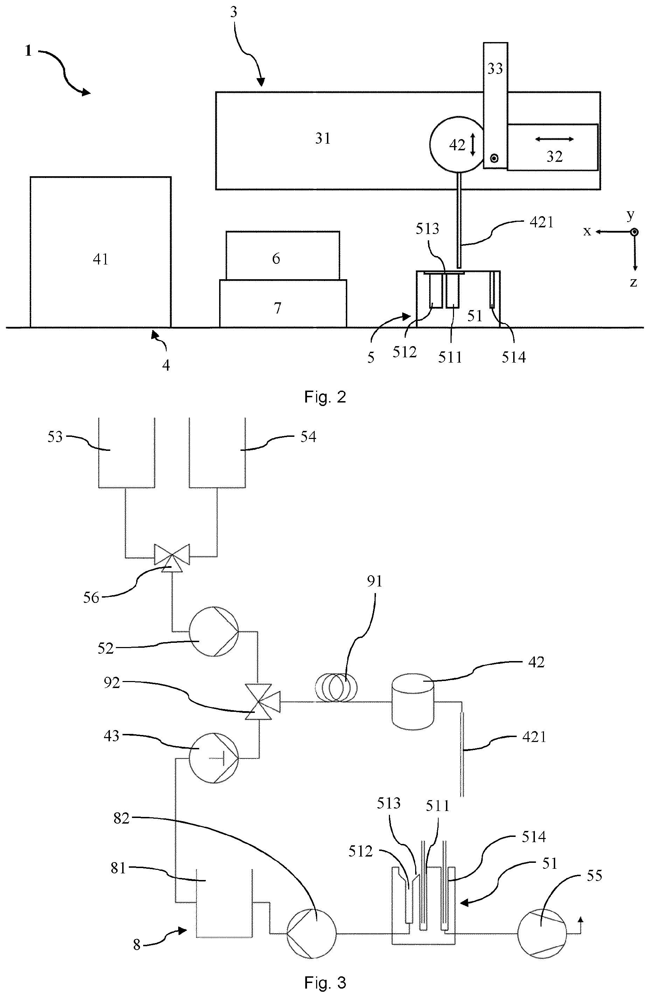

In Fig. 2, the fluid analysis arrangement 1 is shown from a side. Thereby, it can be seen that the sensor unit 42 is equipped with an injection needle 421 as sensing stick. The injection needle 421 is stationary in the sensor unit 42 such that when the sensor unit 42 is vertically displaced, i.e. up and down in Fig. 2, by the z-arm 33 of the linear robot 3, and horizontally displaced by the x-arm 31 and by the y-arm 32, the injection needle 421 is conjunctionally moved with the rest of the control unit 42. Like this, the injection needle 421 can be positioned by the control unit 2 to be positioned at any location required for processing the sample fluids in order to be verified for particles.

As can be seen in Fig. 2, the washing seat 511 and the cleaning medium cavity 512 are dimensioned to conveniently receive the injection needle 421. The overflow structure 513 connects the washing seat 511 to the cleaning medium cavity 512 such that when the washing seat 511 is filled with a fluid to a certain extent the fluid flows over into the cleaning medium cavity 512. The drying coupler 514 is dimensioned to tightly receive the injection needle 421. It further is equipped with a gasket structure to achieve tightness. In particular, the drying coupler 514 is arranged such that when the injection needle 421 is arranged in it and the vacuum pump 55 applies a vacuum, the sensor unit 42 is set at negative pressure via the injection needle 421.

Fig. 3 shows a flow scheme to illustrate the logical inter-relation of the components of the fluid analysis arrangement 1. Thereby, it can be seen that the pure water reservoir 53 and the storage and cleaning solution reservoir 54 are connected to the washing pump 52 via a three-way washing medium valve 56 of the washing station 5. The control unit 2 is configured by the dedicated software to set the washing medium valve 56 in order to define if the washing pump 52 forwards the ultrapure water of the pure water reservoir 53 or the solution of the storage and cleaning solution reservoir 54, when being activated.

The liquid particle counter 4 is equipped with a sensor pump 43 as sample fluid drawer, which is connected to the sensor unit 42 via a three-way sensor valve 92 and a sample loop 91 of the fluid analysis arrangement 1. The sample loop 91 is embodied by windings of a tube, which connects the sensing stick 421 to the sensor valve 92. The control unit 2 is configured by the dedicated software to set the sensor valve 92 in order to define if the sensor unit 42 is connected to the sensor pump 43 for withdrawing via the injection needle 421 a sample fluid or used ultrapure water to be measured by the sensor unit 42, or to the washing pump 52 for providing ultrapure water or solution through the sample loop 91 and sensor unit 42.

The sensor pump 43 is further connected to the waste container 8 such that any fluid forwarded by the sensor pump 43 can be gathered in the waste container 8. As can further be seen in Fig. 3, the overflow structure 513 of the washing body 51 has an inclined surface such that it can be assured that fluids may only flow form the washing seat 511 to the cleaning medium cavity 512, but not the other way around.

The fluid analysis arrangement 1 is operated in a method of analysing a fluid according to the invention as follows:

The holder 6 is provided with a plurality of vials each filled with a sample fluid to be analysed. The control unit 2 controls the linear robot 3 to automatically arrange the injection needle 421 in one of the sample fluids of the plurality of vials. The control unit 2 sets the sensor valve 92 to open the sensor pump 43 towards the sensor unit 42. The control unit 2 activates the sensor pump 43 such that the sample fluid is withdrawn through the injection needle 421 into the sensor unit 42 which automatically senses for particles in the sample fluid. A sensor signal is transferred from the senor unit 42 to the evaluation station 41 where it is evaluated. The control unit 2 then deactivates the sensor pump 43 and controls the linear robot 3 to automatically arrange the injection needle 421 into the washing seat 511 of the washing station 5.

The control unit 2 sets the sensor valve 92 to open the washing pump 52 towards the sensor unit 42. It further sets the washing medium valve 56 to open the washing pump 52 towards the pure water reservoir 53. The control unit 2 activates the washing pump 52 such that the sample loop 91 and the sensor unit 42 are flushed with ultrapure water which is forwarded into the washing seat 511. Once the washing seat 511 is filled up to the overflow structure 513 the ultrapure water flows into the cleaning medium cavity 512.

After finishing flushing the sensor unit 42, the control unit 2 controls the linear robot 3 to arrange the injection needle 421 inside the cleaning medium cavity 512. Then the control unit 2 sets the sensor valve 92 appropriately and operates the sensor pump 43 such that the injection needle 421 withdraws ultrapure water from the cleaning medium cavity 512. The withdrawn ultrapure water is now analyzed for the presence of particles by the liquid particle counter 4 in the same way as the sample fluid.

In case that the amount of particles or concentration of particles identified by liquid particle counter 4 is above a predefined threshold, the flushing of the sensor unit 42 as described above is repeated. Once the amount of particles or concentration of particles identified by liquid particle counter 4 is below the predefined threshold, the control unit 2 controls the linear robot to displace the injection needle 421 into the drying coupler 514. Then the control unit 2 activates the vacuum pump 55 which creates a negative pressure in the sensor unit 42 and the sample loop 91. Like this, residual ultrapure water is removed or withdrawn. Now, the control unit 2 controls the linear robot to arrange the injection needle 421 in the sample fluid of a next one of the plurality of vials.

The complete cycle of analysing the sample fluid and cleaning the system is repeated by the control unit 2 until the sample fluids of all vials are analysed. Thereby, the control unit 2 activates the shaker 7 whenever the injection needle 421 is not positioned in any of the vials. After the sample fluids of all vials being analyzed the control unit controls the system to be finally cleaned with the solution contained in the storage and cleaning solution reservoir 54.

This description and the accompanying drawings that illustrate aspects and embodiments of the present invention should not be taken as limiting the claims defining the protected invention. In other words, while the invention has been illustrated and described in detail in the drawings and foregoing description, such illustration and description are to be considered illustrative or exemplary and not restrictive. In some instances, well-known circuits, structures and techniques have not been shown in detail in order not to obscure the invention. Thus, it will be understood that changes and modifications may be made by those of ordinary skill within the scope of the following claims. In particular, the present invention covers further embodiments with any combination of features from different embodiments described above and below.

The disclosure also covers all further features shown in the Figs. individually although they may not have been described in the afore or following description. Also, single alternatives of the embodiments described in the figures and the description and single alternatives of features thereof can be disclaimed from the subject matter of the invention or from disclosed subject matter. The disclosure comprises subject matter consisting of the features defined in the claims or the exemplary embodiments as well as subject matter comprising said features.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

## Claims

1. A fluid analysis arrangement (1), comprising
a particle quantifying device (4) having a sensor unit (42) with a sensing stick (421) to be arranged in a fluid to sense for particles in the fluid, and an evaluation unit (41),
a holder (6) having a plurality of seats each configured to receive a container in which a sample fluid is arranged,
a robot (3),
a washing station (5), and
a control unit (2) connected to the particle quantifying device (4) and the robot (3), wherein
the sensor unit (42) is mounted to the robot (3), and
the control unit (2) is configured to
control the robot (3) to arrange the sensing stick (421) in one of the sample fluids of each container received in the seats of the holder (6) after another,
activate the particle quantifying device (4) to sense for particles in the sample fluids, and
control the robot (3) to arrange the sensing stick (421) in the washing station (5) after each sensing for particles in one of the sample fluids and before arranging the sensing stick (421) in a next one of the sample fluids.

2. The fluid analysis arrangement (1) of claim 1, wherein
the washing station (5) comprises a cleaning medium reservoir (53) housing a cleaning medium and a cleaning medium forwarder (52) connected to the cleaning medium reservoir (53), wherein the control unit (2) is connected to the washing station (5) and configured to activate the cleaning medium forwarder (52) to flush the sensor unit (42) with the cleaning medium after the particle quantifying device (4) sensing for particles in the sample fluid of one of the containers received in the seats of the holder (6) and before the particle quantifying device (4) sensing for particles in the sample fluid of another one of the containers received in the seats of the holder (6),
the washing station (5) preferably has a washing seat (511) in which the sensing stick (421) is arranged when the sensor unit (42) is flushed with the cleaning medium, and
the washing station (5) preferably comprises a cleaning medium cavity (512) arranged to receive the cleaning medium after flushing the sensor unit (42).

3. The fluid analysis arrangement (1) of claim 2, wherein the washing seat (511) and the cleaning medium cavity (512) are in fluid communication such that after flushing the sensor unit (42) the cleaning medium is provided into the washing seat (511) and transferred from the washing seat (511) into the cleaning medium cavity (512).

4. The fluid analysis arrangement (1) of claim 2 or 3, wherein
the control unit (2) is configured to control the robot (3) to arrange the sensing stick (421) in the cleaning medium cavity (512) to sense for particles in the cleaning medium after flushing the sensor unit (42),
the control unit (2) preferably is configured to control the robot (3) to arrange the sensing stick (421) in the sample fluid of the other one of the containers received in the seats of the holder (6) when the amount of particles sensed in the cleaning medium after flushing the sensor unit (42) is below a predefined threshold, and
the control unit (2) preferably is configured to re-activate the cleaning medium forwarder (52) to flush the sensor unit (42) with the cleaning medium when the amount of particles sensed in the washing medium after flushing the sensor unit (42) is above the predefined threshold.

5. The fluid analysis arrangement (1) of any one of the preceding claims, wherein the washing station (5) comprises a drying coupler (514) and the control unit (2) is configured to control the robot (3) to arrange the sensing stick (421) in the drying coupler (514) before arranging the sensing stick (421) in the sample fluid of the other one of the containers received in the seats of the holder (6), and, optionally
the washing station (5) comprises a vacuum creator (55) connected to the control unit (2), the control unit (2) being configured to activate the vacuum creator (55) to dry the sensor unit (42) when the sensing stick (421) is arranged in the drying coupler (514).

6. The fluid analysis arrangement (1) of any one of the preceding claims, comprising a shaker (7), wherein
the holder (6) is arranged on the shaker (7) to be moved by the shaker (7), and
preferably the control unit (2) is connected to the shaker (7) and configured to activate the shaker (7) when the sensing stick (421) is not arranged in the sample fluid of any container received in the seats of the holder (6).

7. The fluid analysis arrangement (1) of any one of the preceding claims, wherein the robot (3) is a linear robot (3) embodied to move the sensor unit (42) along a horizontal x-axis and a vertical z-axis.

8. The fluid analysis arrangement (1) of any one of the preceding claims, comprising a sample loop (91) positioned between the sensor unit (42) of the particle quantifying device (4) and the evaluation unit (41) of the particle quantifying device (4).

9. The fluid analysis arrangement (1) of any one of the preceding claims, comprising a sample fluid drawer (43) in fluid connection with the sensing stick (421) of the sensor unit (42), wherein preferably a fluid connection structure between the sample fluid drawer (43) and the sensing stick (421) of the sensor unit (42) is at least partially filled with a transmission medium.

10. A method of analysing a fluid, comprising the steps of:
i) obtaining a plurality of containers each filled with a sample fluid to be analysed;
ii) a robot (3) automatically arranging a sensing stick (421) of a sensor unit (42) of a particle quantifying device (4) in one of the sample fluids of the plurality of containers;
iii) the sensor unit (42) of the particle quantifying device (4) automatically sensing for particles in the one of the sample fluids;
iv) the robot (3) automatically arranging the sensing stick (421) of the sensor unit (42) of the particle quantifying device (4) in a washing station (5);
v) cleaning the sensing stick (421) of the sensor unit (42) of the particle quantifying device (4) arranged in the washing station (5); and
vi) repeating steps ii) to v) for each of the other ones of the samples of the plurality of containers one after the other.

11. The method of claim 10, wherein step v) comprises a cleaning medium forwarder (52) flushing the sensor unit (42) with a cleaning medium, and the washing station (5) preferably has a washing seat (511) in which the sensing stick (421) is arranged when the sensor unit (42) is flushed with the cleaning medium.

12. The method of claim 11, wherein
the cleaning medium is gathered after flushing the sensor unit (42), and
the sensor unit (42) of the particle quantifying device (4) preferably automatically senses for particles in the gathered cleaning medium.

13. The method of claim 12, wherein
step vi) is performed when the amount of particles sensed in the gathered cleaning medium is below a predefined threshold, and/or
step v) is re-performed when the amount of particles sensed in the gathered cleaning medium is above a predefined threshold.

14. The method of any one of the claims 10 to 13, wherein
step v) comprises drying the sensor unit (42), and
drying the sensor unit (42) preferably comprises a vacuum creator (55) of the washing station (5) applying a vacuum to the sensor unit (42).

15. The method of any one of claims 10 to 14, comprising shaking the plurality of containers in step iii), in step iv) and in step v).

## Patentansprüche

1. Anordnung zur Fluidanalyse (1), umfassend
eine Vorrichtung zur Quantifizierung von Partikeln (4), die eine Sensoreinheit (42) mit einem Sensorschaft (421), der in einer Flüssigkeit angeordnet wird, um Partikel in der Flüssigkeit zu erfassen, und eine Auswertungseinheit (41) aufweist,
einen Halter (6), der eine Vielzahl von Sitzen aufweist, die jeweils konfiguriert sind, um einen Behälter aufzunehmen, in dem ein Probenfluid angeordnet ist,
einen Roboter (3),
eine Waschstation (5) und
eine Steuereinheit (2), die mit der Vorrichtung zur Quantifizierung von Partikeln (4) und dem Roboter (3) verbunden ist, wobei
die Sensoreinheit (42) an dem Roboter (3) montiert ist und
die Steuereinheit (2) konfiguriert ist, um
den Roboter (3) zu steuern, um den Sensorschaft (421) nacheinander in einer der Probenfluide jedes Behälters anzuordnen, die in den Sitzen des Halters (6) aufgenommen sind,
die Vorrichtung zur Quantifizierung von Partikeln (4) zu aktivieren, um Partikel in den Probenfluiden zu erfassen, und
den Roboter (3) zu steuern, um den Sensorschaft (421) nach jedem Erfassen von Partikeln in einer der Probenfluide und vor dem Anordnen des Sensorschafts (421) in einer nächsten der Probenfluide in der Waschstation (5) anzuordnen.

2. Anordnung zur Fluidanalyse (1) nach Anspruch 1, wobei
die Waschstation (5) ein Reinigungsmedium-Reservoir (53), in dem ein Reinigungsmedium untergebracht ist, und eine Reinigungsmedium-Fördereinrichtung (52), die mit dem Reinigungsmedium-Reservoir (53) verbunden ist, umfasst, wobei die Steuereinheit (2) mit der Waschstation (5) verbunden ist und konfiguriert ist, um die Reinigungsmedium-Fördereinrichtung (52) zu aktivieren, um die Sensoreinheit (42) mit dem Reinigungsmedium zu spülen, nachdem die Vorrichtung zur Quantifizierung von Partikeln (4) Partikel im Probenfluid eines der Behälter erfasst hat, die in den Sitzen des Halters (6) aufgenommen sind, und bevor die Vorrichtung zur Quantifizierung von Partikeln (4) Partikel im Probenfluid eines anderen der Behälter erfasst, die in den Sitzen des Halters (6) aufgenommen sind,
die Waschstation (5) vorzugsweise einen Waschsitz (511) aufweist, in dem der Sensorschaft (421) angeordnet ist, wenn die Sensoreinheit (42) mit dem Reinigungsmedium gespült wird, und
die Waschstation (5) vorzugsweise einen Hohlraum (512) für Reinigungsmedium umfasst, der angeordnet ist, um das Reinigungsmedium nach dem Spülen der Sensoreinheit (42) aufzunehmen.

3. Anordnung zur Fluidanalyse (1) nach Anspruch 2, wobei der Waschsitz (511) und der Hohlraum (512) für Reinigungsmedium in Flüssigkeitsverbindung stehen, sodass nach dem Spülen der Sensoreinheit (42) das Reinigungsmedium in dem Waschsitz (511) bereitgestellt und von dem Waschsitz (511) in den Hohlraum (512) für Reinigungsmedium übertragen wird.

4. Anordnung zur Fluidanalyse (1) nach Anspruch 2 oder 3, wobei
die Steuereinheit (2) konfiguriert ist, um den Roboter (3) zu steuern, um den Sensorschaft (421) in dem Hohlraum (512) für Reinigungsmedium anzuordnen, um nach dem Spülen der Sensoreinheit (42) Partikel in dem Reinigungsmedium zu erfassen,
die Steuereinheit (2) vorzugsweise konfiguriert ist, um den Roboter (3) zu steuern, um den Sensorschaft (421) im Probenfluid des anderen der Behälter anzuordnen, die in den Sitzen des Halters (6) aufgenommen sind, wenn die Menge an Partikeln, die in dem Reinigungsmedium nach dem Spülen der Sensoreinheit (42) erfasst wurde, unter einem vordefinierten Schwellenwert liegt, und
die Steuereinheit (2) vorzugsweise konfiguriert ist, um die Reinigungsmedium-Fördereinrichtung (52) zu reaktivieren, um die Sensoreinheit (42) mit dem Reinigungsmedium zu spülen, wenn die Menge an Partikeln, die in dem Waschmedium nach dem Spülen der Sensoreinheit (42) erfasst wurde, über dem vordefinierten Schwellenwert liegt.

5. Anordnung zur Fluidanalyse (1) nach einem der vorhergehenden Ansprüche, wobei die Waschstation (5) eine Trocknungskupplung (514) umfasst und die Steuereinheit (2) konfiguriert ist, um den Roboter (3) zu steuern, um den Sensorschaft (421) in der Trocknungskupplung (514) anzuordnen, bevor der Sensorschaft (421) im Probenfluid des anderen der Behälter angeordnet wird, die in den Sitzen des Halters (6) aufgenommen sind, und gegebenenfalls
die Waschstation (5) einen Vakuumerzeuger (55) umfasst, der mit der Steuereinheit (2) verbunden ist, wobei die Steuereinheit (2) konfiguriert ist, um den Vakuumerzeuger (55) zu aktivieren, um die Sensoreinheit (42) zu trocknen, wenn der Sensorschaft (421) in der Trocknungskupplung (514) angeordnet ist.

6. Anordnung zur Fluidanalyse (1) nach einem der vorhergehenden Ansprüche, umfassend einen Schüttler (7), wobei
der Halter (6) auf dem Schüttler (7) angeordnet ist, um durch den Schüttler (7) bewegt zu werden, und
vorzugsweise die Steuereinheit (2) mit dem Schüttler (7) verbunden ist und konfiguriert ist, um den Schüttler (7) zu aktivieren, wenn der Sensorschaft (421) nicht im Probenfluid eines Behälters angeordnet ist, der in den Sitzen des Halters (6) aufgenommen ist.

7. Anordnung zur Fluidanalyse (1) nach einem der vorhergehenden Ansprüche, wobei der Roboter (3) ein Linearroboter (3) ist, der ausgeführt ist, um die Sensoreinheit (42) entlang einer horizontalen x-Achse und einer vertikalen z-Achse zu bewegen.

8. Anordnung zur Fluidanalyse (1) nach einem der vorhergehenden Ansprüche, umfassend eine Probenschleife (91), die zwischen der Sensoreinheit (42) der Vorrichtung zur Quantifizierung von Partikeln (4) und der Auswertungseinheit (41) der Vorrichtung zur Quantifizierung von Partikeln (4) positioniert ist.

9. Anordnung zur Fluidanalyse (1) nach einem der vorhergehenden Ansprüche, umfassend einen Probenfluidentnehmer (43) in Flüssigkeitsverbindung mit dem Sensorschaft (421) der Sensoreinheit (42), wobei vorzugsweise eine Flüssigkeitsverbindungsstruktur zwischen der Probenfluidentnehmer (43) und dem Sensorschaft (421) der Sensoreinheit (42) zumindest teilweise mit einem Übertragungsmedium gefüllt ist.

10. Verfahren zur Analyse einer Flüssigkeit, umfassend die folgenden Schritte:
i) Erhalten einer Vielzahl von Behältern, die jeweils mit einem zu analysierenden Probenfluid gefüllt sind;
ii) automatisches Anordnen eines Sensorschafts (421) einer Sensoreinheit (42) einer Vorrichtung zur Quantifizierung von Partikeln (4) in einem der Probenfluide der Vielzahl von Behältern durch einen Roboter (3);
iii) automatisches Erfassen von Partikeln im einen der Probenfluide durch die Sensoreinheit (42) der Vorrichtung zur Quantifizierung von Partikeln (4);
iv) automatisches Anordnen des Sensorschafts (421) der Sensoreinheit (42) der Vorrichtung zur Quantifizierung von Partikeln (4) in einer Waschstation (5) durch den Roboter (3);
v) Reinigen des Sensorschafts (421) der Sensoreinheit (42) der in der Waschstation (5) angeordneten Vorrichtung zur Quantifizierung von Partikeln (4); und
vi) Wiederholen der Schritte ii) bis v) für jede der anderen der Proben der Vielzahl von Behältern nacheinander.

11. Verfahren nach Anspruch 10, wobei Schritt v) eine Reinigungsmedium-Fördereinrichtung (52) umfasst, die die Sensoreinheit (42) mit einem Reinigungsmedium spült, und die Waschstation (5) vorzugsweise einen Waschsitz (511) aufweist, in dem der Sensorschaft (421) angeordnet ist, wenn die Sensoreinheit (42) mit dem Reinigungsmedium gespült wird.

12. Verfahren nach Anspruch 11, wobei
das Reinigungsmedium nach dem Spülen der Sensoreinheit (42) gesammelt wird und
die Sensoreinheit (42) der Vorrichtung zur Quantifizierung von Partikeln (4) vorzugsweise automatisch Partikel in dem gesammelten Reinigungsmedium erfasst.

13. Verfahren nach Anspruch 12, wobei
Schritt vi) durchgeführt wird, wenn die Menge an Partikeln, die in dem gesammelten Reinigungsmedium erfasst wird, unter einem vordefinierten Schwellenwert liegt, und/oder
Schritt v) erneut durchgeführt wird, wenn die Menge an Partikeln, die in dem gesammelten Reinigungsmedium erfasst wird, über einem vordefinierten Schwellenwert liegt.

14. Verfahren nach einem der Ansprüche 10 bis 13, wobei
Schritt v) das Trocknen der Sensoreinheit (42) umfasst und
das Trocknen der Sensoreinheit (42) vorzugsweise das Anlegen eines Vakuums an die Sensoreinheit (42) durch einen Vakuumerzeuger (55) der Waschstation (5) umfasst.

15. Verfahren nach einem der Ansprüche 10 bis 14, umfassend das Schütteln der Vielzahl von Behältern in Schritt iii), in Schritt iv) und in Schritt v).

## Revendications

1. Agencement d'analyse de fluides (1), comprenant
un dispositif de quantification de particules (4) ayant une unité de capteur (42) avec une baguette de détection (421) à agencer dans un fluide pour détecter des particules dans le fluide, et une unité d'évaluation (41),
un support (6) ayant une pluralité d'emplacements chacun configuré pour recevoir un récipient dans lequel un fluide échantillon est agencé,
un robot (3),
une station de lavage (5), et
une unité de commande (2) connectée au dispositif de quantification de particules (4) et au robot (3), dans lequel
l'unité de capteur (42) est montée sur le robot (3), et
l'unité de commande (2) est configurée pour
commander le robot (3) afin d'agencer la baguette de détection (421) dans l'un des fluides échantillons de chaque récipient reçu dans les emplacements du support (6) l'un après l'autre,
activer le dispositif de quantification de particules (4) pour détecter les particules dans les fluides échantillons, et
commander le robot (3) afin d'agencer la baguette de détection (421) dans la station de lavage (5) après chaque détection de particules dans l'un des fluides échantillons et avant l'agencement de la baguette de détection (421) dans un fluide échantillon suivant parmi les fluides échantillons.

2. Agencement d'analyse de fluides (1) selon la revendication 1, dans lequel
la station de lavage (5) comprend un réservoir de milieu de nettoyage (53) accueillant un milieu de nettoyage et un dispositif de transport de milieu de nettoyage (52) connecté au réservoir de milieu de nettoyage (53), dans lequel l'unité de commande (2) est connectée à la station de lavage (5) et configurée pour activer le dispositif de transport de milieu de nettoyage (52) afin de rincer l'unité de capteur (42) avec le milieu de nettoyage après la détection par le dispositif de quantification de particules (4) de particules dans le fluide échantillon de l'un des récipients reçus dans les emplacements du support (6) et avant la détection par le dispositif de quantification de particules (4) de particules dans le fluide échantillon d'un autre des récipients reçus dans les emplacements du support (6),
la station de lavage (5) a de préférence un emplacement de lavage (511) dans lequel la baguette de détection (421) est agencée lorsque l'unité de capteur (42) est rincée avec le milieu de nettoyage, et
la station de lavage (5) comprend de préférence une cavité de milieu de nettoyage (512) agencée pour recevoir le milieu de nettoyage après le rinçage de l'unité de capteur (42).

3. Agencement d'analyse de fluides (1) selon la revendication 2, dans lequel l'emplacement de lavage (511) et la cavité de milieu de nettoyage (512) sont en communication fluidique de telle sorte qu'après le rinçage de l'unité de capteur (42) le milieu de nettoyage est fourni dans l'emplacement de lavage (511) et transféré de l'emplacement de lavage (511) dans la cavité de milieu de nettoyage (512).

4. Agencement d'analyse de fluides (1) selon la revendication 2 ou 3, dans lequel
l'unité de commande (2) est configurée pour commander le robot (3) afin d'agencer la baguette de détection (421) dans la cavité de milieu de nettoyage (512) pour détecter des particules dans le milieu de nettoyage après le rinçage de l'unité de capteur (42),
l'unité de commande (2) est de préférence configurée pour commander le robot (3) afin d'agencer la baguette de détection (421) dans le fluide échantillon de l'autre des récipients reçus dans les emplacements du support (6) lorsque la quantité de particules détectées dans le milieu de nettoyage après le rinçage de l'unité de capteur (42) est inférieure à un seuil prédéfini, et
l'unité de commande (2) est de préférence configurée pour réactiver le dispositif de transport de milieu de nettoyage (52) afin de rincer l'unité de capteur (42) avec le milieu de nettoyage lorsque la quantité de particules détectées dans le milieu de lavage après le rinçage de l'unité de capteur (42) est supérieure au seuil prédéfini.

5. Agencement d'analyse de fluides (1) selon l'une quelconque des revendications précédentes, dans lequel la station de lavage (5) comprend un coupleur de séchage (514) et l'unité de commande (2) est configurée pour commander le robot (3) afin d'agencer la baguette de détection (421) dans le coupleur de séchage (514) avant d'agencer la baguette de détection (421) dans le fluide échantillon de l'autre des récipients reçus dans les emplacements du support (6), et, éventuellement
la station de lavage (5) comprend un dispositif de création de vide (55) connecté à l'unité de commande (2), l'unité de commande (2) étant configurée pour activer le dispositif de création de vide (55) afin de sécher l'unité de capteur (42) lorsque la baguette de détection (421) est agencée dans le coupleur de séchage (514).

6. Agencement d'analyse de fluides (1) selon l'une quelconque des revendications précédentes, comprenant un agitateur (7), dans lequel
le support (6) est agencé sur l'agitateur (7) pour être déplacé par l'agitateur (7), et
de préférence l'unité de commande (2) est connectée à l'agitateur (7) et configurée pour activer l'agitateur (7) lorsque la baguette de détection (421) n'est pas agencée dans le fluide échantillon d'un quelconque récipient reçu dans les emplacements du support (6).

7. Agencement d'analyse de fluides (1) selon l'une quelconque des revendications précédentes, dans lequel le robot (3) est un robot linéaire (3) intégré pour déplacer l'unité de capteur (42) le long d'un axe x horizontal et d'un axe z vertical.

8. Agencement d'analyse de fluides (1) selon l'une quelconque des revendications précédentes, comprenant une boucle d'échantillonnage (91) positionnée entre l'unité de capteur (42) du dispositif de quantification de particules (4) et l'unité d'évaluation (41) du dispositif de quantification de particules (4).

9. Agencement d'analyse de fluides (1) selon l'une quelconque des revendications précédentes, comprenant un dispositif d'aspiration de fluide échantillon (43) en connexion fluidique avec la baguette de détection (421) de l'unité de capteur (42), dans lequel de préférence une structure de connexion fluidique entre le dispositif d'aspiration de fluide échantillon (43) et la baguette de détection (421) de l'unité de capteur (42) est au moins partiellement remplie d'un milieu de transmission.

10. Procédé d'analyse d'un fluide, comprenant les étapes de :
i) obtention d'une pluralité de récipients chacun rempli d'un fluide échantillon à analyser ;
ii) un robot (3) agençant automatiquement une baguette de détection (421) d'une unité de capteur (42) d'un dispositif de quantification de particules (4) dans l'un des fluides échantillons de la pluralité de récipients ;
iii) l'unité de capteur (42) du dispositif de quantification de particules (4) détectant automatiquement les particules dans l'un des fluides échantillons ;
iv) le robot (3) agençant automatiquement la baguette de détection (421) de l'unité de capteur (42) du dispositif de quantification de particules (4) dans une station de lavage (5) ;
v) nettoyage de la baguette de détection (421) de l'unité de capteur (42) du dispositif de quantification de particules (4) agencé dans la station de lavage (5) ; et
vi) répétition des étapes ii) à v) pour chacun des autres échantillons de la pluralité de récipients l'un après l'autre.

11. Procédé selon la revendication 10, dans lequel l'étape v) comprend un dispositif de transport de milieu de nettoyage (52) rinçant l'unité de capteur (42) avec un milieu de nettoyage, et la station de lavage (5) a de préférence un emplacement de lavage (511) dans lequel la baguette de détection (421) est agencée lorsque l'unité de capteur (42) est rincée avec le milieu de nettoyage.

12. Procédé selon la revendication 11, dans lequel
le milieu de nettoyage est recueilli après le rinçage de l'unité de capteur (42), et
l'unité de capteur (42) du dispositif de quantification de particules (4) détecte de préférence automatiquement les particules dans le milieu de nettoyage recueilli.

13. Procédé selon la revendication 12, dans lequel
l'étape vi) est réalisée lorsque la quantité de particules détectées dans le milieu de nettoyage recueilli est inférieure à un seuil prédéfini, et/ou
l'étape v) est réalisée à nouveau lorsque la quantité de particules détectées dans le milieu de nettoyage recueilli est supérieure à un seuil prédéfini.

14. Procédé selon l'une quelconque des revendications 10 à 13, dans lequel
l'étape v) comprend le séchage de l'unité de capteur (42), et
le séchage de l'unité de capteur (42) comprend de préférence un dispositif de création de vide (55) de la station de lavage (5) appliquant un vide sur l'unité de capteur (42).

15. Procédé selon l'une quelconque des revendications 10 à 14, comprenant l'agitation de la pluralité de récipients dans l'étape iii), dans l'étape iv) et dans l'étape v).
